# EUROPEAN PATENT APPLICATION

(11) **EP 1 696 064 A1**
(43) Date of publication of application: **30.08.2006**
(21) Application number: 05024535.6
(22) Date of filing: 10.11.2005
(51) Int. Cl.: D04H 13/00, B32B 5/26, D04H 5/00, D04H 1/46

(54) **Cleansing sheets, manufacturing process and use thereof**

(30) Priority: 23.02.2005 EP 05003866
(71) Applicant: Carl Freudenberg KG, 69465 Weinheim (DE); Jacob Holm Management GmbH, 4123 Allschwil (CH)
(72) Inventor: Schubert, Dirk, 69493 Leutershausen (DE); Hess, Michael, 67705 Trippstadt (DE); Stoffel, Peter, 4053 Basel (CH); Groten, Robert, 68280 Sundhoffen (FR); Simpson, Nick, Mobile, AL 36604 (US); Mariani, Eric, 68120 Richwiller (FR)

(57) **Abstract**

Disclosed are liquid impregnated sheets containing a combination of split-fibres and/or meltblown fibres with regular fibres of thermoplastic polymers. The sheets can be monolayers or multilayers with non-wovens of split-fibres on the outer portions of the multilayered sheets.

The sheets possess good storage and release characteristics for a liquid and can be used as cleansing sheets for personal care or for polishing purposes.

## Description

### Field of the Invention

This application relates to spunlaced fabrics and to multilayered sheets and to a process for their production, wherein the sheet is intended for use as a liquid impregnated wipe, preferably for personal care and polishing purposes.

### Background of the Invention

Non-wovens made from fibres with very fine denier are known. One method for preparing such non-woven products comprises spinning of multicomponent fibres of incompatible polymers, formation of the non-woven in a manner known per se and subsequently splitting the multicomponent fibres into their single components by the action of hydroentanglement. Those non-wovens are disclosed for example in US-A-5,970,583 and US-A-6,465,095.

EP-A-864,006 discloses a non-woven made from micro fibres of very fine denier. These are produced from very fine splittable fibres which are made by melt blowing of at least one hydrophilic or hydrophilically treated polymer. Also disclosed is production of laminated products by combination of these non-wovens with other layers. These products are proposed as single use products (disposal).

Other non-wovens made from split fibres and their combinations with other non-wovens or films are disclosed in WO-A-96/41,041 and WO-A-97/21,862. The split fibre non-wovens are characterised by the presence of two different fibre types from incompatible polymers, one thereof being hydrophilic. The non-wovens can be used in different fields, for example in diapers or in protective clothing.

Multilayered textile sheet made from microfibres different from split fibres are also known. Some of these combinations are excellent cleansing wipes.

EP-A-569,860 disdoses a multi-layered non-woven which is a combination of spunbond layers with a layer of meltblown microfibres in between. The spunbond layers are made of thermobonded thermoplastic filaments and contain a nucleating agent. The laminates are characterised by an improved strength and are used as fabrics for working cloth or as components for diapers.

EP-A-423,619 discloses cleansing wipes with good cleansing properties and excellent retention for aqueous liquids. The wipes comprise a reinforcement layer, typically a spunbond, which contains synthetic and natural staple fibres. At the surface of these wipes the staple fibre combinations form sections with different area densities.

EP-A-357,496 discloses a cleansing wipe made of a non-woven. This consists of a combination of polymer microfibres and wood pulp or cellulosic fibres and is impregnated with a surface active agent. The wipe possesses an absorption capacity of 5-15 g liquid per g substrate.

Another cleansing wipe with high liquid absorption capacity is disclosed in EP-A-80,383. This product easily releases stored liquid and is a non-woven comprising thermobonded meltblown fibres. 1-40% of the product surface are openings.

DE 199 17 275 B4 discloses a non-woven cleansing wipe made from micro staple-fibres derived from multicvmpvnent split-fibres from at least two different polymers and from absorbent secondary staple fibres made from the viscose spinning process or the lyocell spinning process. Besides a high abrasion resistance and high absorption volume for abrased dirt the cleansing wipe has a good cleansing activity and a good textile feel.

DE 199 03 903 A1 discloses a three-layered wipe for cosmetic applications. The wipe consists of a central layer and two cover layers which consist of split fibres with a fibre diameter of less than 10 µm. The wipe has a high effectiveness and a small volume can be washed and reused and can be used without pilling. For the cover layers combinations of polyester and polyamide are disclosed. The central layer can also consist of these fibre combinations, optionally with added viscose fibres or can consist of viscose fibres only. The wipes are designed for dry application.

Liquid impregnated wipes for personal care must meet a combination of properties which are difficult to obtain. On the one hand such wipes should retain the liquid as long and as homogeneous as possible during storage without any leakage/sedimentation from lotion into the storage box. On the other hand when used the wipe should transfer a sufficient amount of liquid to the skin of the user.

Other requirements are softness and bulkiness of the wipe and sufficient mechanical properties, such as a sufficient strength.

In addition the materials from which the wipes are made should be inexpensive and/or the manufacturing process of said wipes should be simple to minimize manufacturing costs.

Also the amount of lotion necessary for an intended use should be as small as possible. Thus losses during storage or retention of lotion during use should be also as small as possible.

Personal cleansing wipes, particularly baby wipes, are made using a range of nonwoven technologies. Typically synthetic fibres such as polyester or polypropylene are combined with cellulose fibres such as viscose, lyocell, cotton or wood pulp. Generally the synthetic fibre provides bulk and low cost and the cellulose fibre provides absorbency. The use of cellulose imposes limitations on softness, strength, bulk and cost.

### Summary of the Invention

It is one object of this invention to solve the need for adequate absorbency by substituting for the cellulosic content with microfibres of thermoplastic polymers. This allows for an enhanced mix of fabric properties at reduced base weight, notably an increase in softness, strength, toughness, thickness and opacity.

It is another object of this invention to provide wipes with improved storage and release capability for liquid.

It is still another object of this invention to provide wipes with high effective absorption and release capacity for liquid consisting essentially of thermoplastic polymers.

It is still another object of this invention to provide a personal cleansing wipe as well as a process for its manufacture of comparable weight to existing products, without the use of cellulose fibre, which has superior properties of softness, absorbency, thickness, toughness and opacity. The opportunity also exists to reduce basis weight and achieve a low cost product with superior performance.

It is still another object of this invention to provide simple and economically improved manufacturing processes for wipes using thermoplastic polymers only.

Further objects of this invention will become apparent from the following description.

In one embodiment this invention relates to a multilayered sheet impregnated with a liquid comprising a first non-woven layer consisting essentially of thermoplastic polymer fibres of titre of 0.5 to 10 dtex and at least one second non-woven split-fibre layer of thermoplastic polymers.

In another embodiment this invention relates to a multilayered sheet impregnated with a liquid comprising at least five layers, one of said layers being a first non-woven central layer consisting essentially of thermoplastic polymer fibres of titre of 0.5 to 10 dtex, two of said layers consist essentially of meltblown fibres of thermoplastic polymers which layers are located at both sides of the first central non-woven layer and which meltblown layers are covered by non-woven layers consisting essentially of thermoplastic polymer fibres of titre of 0.5 to 10 dtex.

In still another embodiment this invention relates to a one-layered sheet impregnated with a liquid which is a spunlaced fabric produced from a fibre web consisting essentially of 20 to 97 % by weight of thermoplastic polymer fibres of titre 0.5 to 10 dtex and of 3 to 80 % by weight of split-fibres of thermoplastic polymers and of 0 to 50 % by weight of meltblown fibres of thermoplastic polymers.

Unexpectedly it has been found that by combining split-fibres and optionally meltblown fibres with regular fibres of thermoplastic polymers in a single layer or combining different layers of non-wovens of regular fibres with non-wovens of split-fibres and optionally with layers of meltblown fibres with the split-fibre layers on the outer portions of the multilayered sheets or by combining layers of meltblown fibres sandwiched between layers of regular fibres of thermoplastic materials products are obtained which possess the desired storage and release characteristics for a liquid. Thus liquid impregnated wipes made from thermoplastic polymers with simple manufacturing processes can be prepared.

The presence of split-fibres and/or meltblown fibres in the sheets of this invention provides a combination of valuable properties of the sheet. Adding split-fibres and/or meltblown fibres to fibres with conventional fineness either in form of separate layers and/or as fibre mixtures in single layers results in increased softness, lintfreeness, opacity, storage and release capability for lotion.

### Detailed description of the invention

The impregnated sheets of this invention can consist of one layer only or are preferably multilayer sheets.

The term "first non-woven layer consisting essentially of thermoplastic polymer fibres of titre of 0.5 to 10 dtex" shall mean that said fibres form a major part of the fibres of this layer, for example said fibres are present in an amount of at least 50 % by weight, preferably 80 -100 % by weight of said layer. Besides said fibres microdenier fibres and/or additives typically used in such non-woven layers may be present. Examples thereof are pigments, such as titanium dioxide, optical brighteners, hydrophilic agents, flameproofing agents, antistatic agents, biocidal agents or a combination of two or more thereof,

The term "second non-woven split-fibre layer of thermoplastic polymers" shall mean that said split-fibres form a considerable amount of the fibres of this layer, for example said fibres are present in an amount of at least 20 % by weight, preferably 70 -100 % by weight of said layer. Besides said split-fibres regular denier fibres (fibres with titre between 0.5 and 10 dtex) and/or additives typically used in such non-woven layers may be present. Examples thereof are pigments, such as titanium dioxide, optical brighteners, hydrophilic agents, flameproofing agents, antistatic agents, biocidal agents or a combination of two or more thereof,

The term "thermoplastic polymer" shall mean all thermoplastic and fibre-forming man-made polymers including thermoplastic elastomers,

Very preferred sheets comprise three layers including a central non-woven layer of thermoplastic fibres with denier between 0.5 and 10 dtex or of a mixture of at least 80 % by weight of thermoplastic fibres with denier between 0.5 and 10 dtex and of up to 20 % by weight of split-fibres of thermoplastic polymers and at the surfaces two non-woven split-fibre layers of 100 % by weight of split-fibres of thermoplastic polymers or of a mixture of at least 70 % by weight of split-fibres of thermoplastic fibres and of up to 30 % by weight of fibres of thermoplastic polymers with titre between 0.5 and 10 dtex.

A very preferred product of this multilayered sheet consists of three layers, wherein a first non-woven layer is a central non-woven layer which is sandwiched between two non-woven split-fibre layers.

Another very preferred product of this invention is a three-layered sheet, wherein a first non-woven layer is combined with a layer consisting of meltblown fibres of_thermoplastic polymer and the surface of the meltblown layer opposite to the first_non-woven layer is covered with a non-woven split-fibre layer.

Other very preferred sheets consist of five layers, wherein two layers consist essentially of meltblown fibres of thermoplastic polymers. These layers are arranged at both surfaces of a central non-woven layer made of fibres of thermoplastic polymers with titre between 0.5 and 10 dtex. The surfaces of the meltblown layers are covered by non-woven spfit-fibre layers of thermoplastic polymers.

Other very preferred sheets consist of four layers, wherein one layer consists essentially of meltblown fibres of thermoplastic polymers. This layer is arranged at one surface of a central non-woven layer made of fibres of thermoplastic polymers with titre between 0.5 and 10 dtex. The other surface of the meltblown layer and of the central non-woven layer are covered by non-woven split-fibre layers of thermoplastic polymers.

The first non-woven layer contains continuous filaments and/or staple fibres of thermoplastic polymers. These fibres possess regular titre between 0.5 and 10 dtex, preferably between 1 and 5 dtex. Typical fibre diameters are above 10 µm.

If improved elasticity and stretching properties are required the first non-woven layer may comprise fibres made from thermoplastic elastomers.

Preferably the first non-woven layer is made from staple fibres.

Preferred titres of fibres forming the first non-woven layer are between 1 and 5 dtex.

The first non-woven layer consists essentially of fibres made from thermoplastic polymers. All fibre-forming thermoplastic polymers can be used, for example polyesters, such as polyethylenterephthalate, polyamides, such as Nylon 6 or Nylon 6.6, or polyolefins, such as polypropylene. Besides homopolymers copolymers can be used, for example propylene-ethylone-copolymers. Polypropylene-Homo- or -Copolymers are preferred as a fibre forming material for the first non-woven layer.

The first non-woven layer typically has a base weight of 5 - 50 g/m², preferably of 10 - 30 g/m².

The split-fibre layer(s) contain continuous split-fibres and/or staple split-fibres of thermoplastic polymers. These split-fibres may be prepared by the conventional split-fibre process and the single fibres after splitting typically possess a fineness below 1.0 dtex and/or fibre diameters below 10 µm, preferably a fineness below 0.5 dtex.

Preferably the split-fibre layers are made from staple fibres or from continuous filaments.

If improved elasticity and stretching properties are required the split-fibre layer(s) may comprise fibres made from thermoplastic elastomers.

The split-fibre layer(s) consist also essentially of fibres made from thermoplastic polymers. For the split-fibre process all combinations of splittable fibre-forming thermoplastic polymers can be used, for example combinations of polyester /polyamide(s), such as combinations of polyethylenterephthalate / Nylon 6 and/or Nylon 6.6. or combinations of polyolefins / polyamide(s), such as combinations of polypropylene / Nylon 6 and/or Nylon 6.6 or combinations of polyolefins, such as combinations of polyethylene and polypropylene.

The single split-fibre non-woven layer typically has a base weight of 5 - 100 g/m², preferably of 10 - 30 g/m².

Besides split-fibre layers the product of this invention may contain additional layers of microdenier fibres made by other processes, such as meltblown fibres of thermoplastic polymers.

In another embodiment shown above the product of this invention may not contain split fibre layers but layers of microdenier fibres made by other processes, such as meltblown fibres of thermoplastic polymers.

Single layers of meltblown fibres of thermoplastic polymers typically have an area weight of 5 - 100 g/m², preferably of 10 - 60 g/m².

Preferred are multilayered sheets with at least one split-fibre layer with split-fibres of thermoplastic polymers consisting essentially of combinations of at least two splittable thermoplastic polymers, preferably of combinations of polyester / polyamide, polyester / polyolefin or combinations of polyolefins, preferably polyethylene / polypropylene, polypropylene / modified polypropylene or polypropylene / modified polyethylene.

Very preferred are multilayered sheets with at least one split-fibre layer with split-fibres of thermoplastic polymers consisting essentially of combinations of thermoplastic polymer fibres one of said thermoplastic polymers being hydrophilic and/or hydrophilic modified. Suitable fibre combinations are disclosed in WO-A-96/41,041 and WO-A-97/21,862,

In a very preferred embodiment the sheet of this invention the thermoplastic polymer fibres of titre of 0.5 to 10 dtex are continuous filaments or staple fibres of polyolefin, preferably of polypropylene, and the split-fibres of thermoplastic polymers are continuous filaments or staple fibres of the combination polyester / polyamide or of the combination polyester / polypropylene or of the combination polyethylene / polypropylene.

The fibres used in the layer(s) of the products of this invention may possess circular or non-circular cross sections or combinations thereof.

The sheets of this invention are stabilized after combination of the single non-woven layers. This stabilisativn treatment is typically a mechanical treatment by the action of rteedles, of a calendering roll and/or preferably by hydroentanglement.

Instead of mechanical entanglement or preferably in addition to mechanical entanglement the sheets of this invention are embossed at least on one surface, for example by the action of a pair of calendering rolls with at least one thereof possessing a profiled surface. Besides this hydroentanglement conditions can be selected to produce an embossing action at the surface. This results in a surface pattem and in a partial solidification of selected parts of the sheet caused by melt adhesion of single fibres at the treated locations of the sheet.

In another preferred embodiment at least one outer layer is coloured, This can direct the user to utilize a preferred surface with enhanced wiping properties.

The sheet of this invention typically has a base weight of 20 - 100 g/m², preferably of 30 - 60 g/m².

The typical thickness of the sheet of this invention depends on the amount of layers present and of process parameters used in the preparation. Typically the thickness is between 0.05 and 2 mm, preferably between 0.1 and 1 mm.

In case of a monolayered staple fibre sheet this is made of nonwoven fabric by a process, which involves forming a web by carding staple synthetic fibre with up to 80 % by weight of splittable fibre. Bonding is preferably achieved by hydroentanglement (spunlacing process) and base weight is preferably in the range 25 to 100 g/m².

The preferred process comprises carding a majority of homofil synthetic staple fibres, such as polyester or polypropylene, with a decitex range of 0.5 to 10, with up to 80 % by weight of splittable fibres with a preferred decitex range of 1 to 4, to form a nonwoven web. The web is preferably stabilized by hydroenfianglement. The splittable fibre has, for example, a pie like multi-segment cross section made up of dissimilar polymers such as polyester and polyamide, situated alternately. The action of hydroentangtement splits the fibre into individual microfibres of titre from 0.05 to 1 decitex. The monolayered fabric so obtained is characterized by a very soft feel, good opacity, and high values for thickness, strength and absorbent capacity.

The liquid for impregnation of the sheet of this invention can be of different kinds. Preferably a lotion comprising oil-in-water emulsion or water-in-oil emulsion is used.

Preferably the liquid is an aqueous lotion comprising surface active agents.

According to a preferred embodiment of the invention the impregnated sheet may be used for polishing purposes. For this purpose the sheet may be impregnated with a polishing liquid which may, for example, be based on silicone or waxes. Generally, all "polishing liquids" which impart smoothness, surface protection and/or decoration to a surface of the polished article can be used. The polishing liquid may also comprise abrasive particles to remove dirt.

The amount of liquid in the impregnated sheet of this invention typically is between 200 and 2000 % by weight, preferably between 400 and 1500 % by weight, referring to the impregnated sheet.

The invention also relates to a process for the production of multilayered and split-fibre layer containing sheets as defined above composing the following steps:
a) combination of a first non-woven layer consisting essentially of thermoplastic polymer fibres of titre of 0.5 to 10 dtex with at least one second non-woven layer comprising split fibres or splittable fibres of thermoplastic polymers,
b) mechanically entangling the layers by action of needles and/or by hydroentanglement and/or by calendering thereby optionally splitting said splittable fibres into spfit-fibres, and
c) impregnation of the sheet with a liquid.

In another embodiment the invention relates to a process for the production of a multilayered and not split-fibre layer but meltblown layer containing sheet as defined above comprising the following steps:
d) combination of a first non-woven layer consisting essentially of thermoplastic polymer fibres of titre of 0.5 to 10 dtex on both surfaces with layers consisting essentially of meltblown fibres of thermoplastic polymers,
e) covering said meltblown layers with non-woven layers consisting essentially of thermoplastic polymer fibres of titre of 0.5 to 10 dtex,
f) mechanically entangling the sheets by action of needles and/or by hydroentanglement and/or by calendering, and
g) impregnation of the sheet with a liquid.

In still another embodiment the invention relates to a process for the production of a monolayered split-fibres and regular fibres containing sheet as defined above comprising the following steps:
h) forming a fibre web consisting of 20 to 97 % by weight of thermoplastic polymer fibres of titre 0.5 to 10 dtex and of 3 to 80 % by weight of split-fibres or of splittable fibres of thermoplastic polymers,
i) mechanically entangling the sheets by the action of needles and/or by hydroentanglement and/or by calendering, thereby optionally splitting said splittable fibres into split-fibres, and
j) impregnation of the sheet with a liquid.

The impregnated sheets of this invention can be used for personal care applications.

The invention also relates to the use of the above-defined sheets as personal cleansing wipes, preferably as baby wipes.

The following examples will explain the invention without limiting it.

Properties of the wipes produced were determined according to EDANA or INDA methods.

Weight (in g/m²) is determined according to EDANA method 40.3-90.

Thickness (in mm) is determined according to EDANA method 30.4-89.

Tensile strength (in N/5mm) is determined according to EDANA method 20.2-89.

Elongation (in %) is determined according to EDANA method 20.2-89.

Absorbent capacity (in %) is determined according to EDANA method 10.1-72.

The Handle-O-Meter test referred to in the tables is a measure for the stiffness of the product according to INDA method 90.3 (01).

### Example 1

A staple fibre web having a basis weight of 47 g/m² was produced from 97% polyester and 3% polyester-polyamide splittable fibre and subjected to hydroentanglement at 47 bar. During the hydroentanglement process the splittable fibres were separated into individual components with a titer of 0.1 decitex Table 1, details the fabric test results in comparison with a commercial personal cleansing wipe.

### Example 2

A staple fibre web having a basis weight of 49 g/m² was produced from 90% polyester and 10% polyester-polyamide splittable fibre and subjected to hydroentanglement at 47 bar. Fabric test results are detailed in table 1.

### Example 3

A tri-layered sheet was produced from a spundbonded nonwoven consisting of polypropylene fibres of titre 1.95 dtex. This layer was sandwiched between two split-fibre nonwovens consisting of microfibres of polyethyleneterephthalate and of polypropylene. The tri-layered combination was subjected to hydroentanglement at 150 bar. During the hydroentanglement process the splittable fibres were separated into individual components with a titer of 0.12 dtex. Table 1 details the fabric test results in comparison with a commercial personal cleansing wipe.

**Table 1**

| | Example 1 | Example 2 | Example 3 | Commercial Sheet |
|---|---|---|---|---|
| Weight (g/m²) | 47 | 49 | 48 | 61 |
| Thickness (mm) | 0.72 | 0.68 | 0.74 | 0.69 |
| Tensile (N/5cm) machine direction | 147 | 147 | 175 | 110 |
| Tensile (N/5cm) Cross direction | 101 | 93 | 123 | 23 |
| Absorption Capacity (%) | 1230 | 1154 | 1179 | 893 |
| Handle-O-Meter (9) | 17 | 19 | 18 | 22 |

From the data of table 1 it is apparent that there has been provided, in accordance with the invention, a personal cleansing cloth that fully satisfies the objects, aims and advantages set forth above.

While the invention has been described in conjunction with specific embodiments thereof, it is evident that many alternatives, modifications and variations will be apparent to those skilled in the art in light of the foregoing description. Accordingly, it is intended to embrace all such alternatives, modifications and variations as fall within the spirit and broad scope of the appended claims.

## Claims

1. A multilayered sheet impregnated with a liquid comprising a first non-woven layer consisting essentially of thermoplastic polymer fibres of titre of 0.5 to 10 dtex and at least one second non-woven split-fibre layer of thermoplastic polymers.

2. A sheet as claimed in claim 1, wherein said sheet comprises three layers including a central non-woven layer of thermoplastic fibres with titre between 0.5 and 10 dtex or of a mixture of at least 80 % by weight of thermoplastic fibres with titre between 0.5 and 10 dtex and of up to 20 % by weight of split-fibres of thermoplastic polymers and at the surfaces two non-woven split-fibre layers of 100 % by weight of split-fibres of thermoplastic polymers or of a mixture of at least 70 % by weight of split-fibres of thermoplastic fibres and of up to 30 % by weight of fibres of thermoplastic polymers with titre between 0.5 and 10 dtex.

3. A sheet as claimed in claim 1, wherein a tri-layered sheet consists of a first non-woven layer which is combined with a layer consisting of meltblown fibres of thermoplastic polymer and the surface of the meltblown layer opposite to the first non-woven layer is covered with a non-woven split-fibre layer.

4. A sheet as claimed in claim 2, wherein said sheet consists of three layers, said first non-woven layer is a central non-woven layer which is sandwiched between two non-woven split-fibre layers.

5. A sheet as claimed in claim 1, wherein said sheet consists of five layers, two of said layers consist essentially of meltblown fibres of thermoplastic polymers which layers are located at both sides of the first central non-woven layer and which meltblown layers are covered by non-woven split-fibre layers of thermoplastic polymers.

6. A sheet as claimed in claim 1, wherein said sheet consists of four layers, one layer consists essentially of meltblown fibres of thermoplastic polymers which layer is arranged at one surface of a central non-woven layer made of fibres of_thermoplastic polymers with titre between 0.5 and 10 dtex and the surfaces of the meltblown layer and of the central non-woven layer are covered by non-woven split-fibre layers of thermoplastic polymers.

7. A multilayered sheet impregnated with a liquid comprising at least five layers, one of said layers being a first non-woven central layer consisting essentially of thermoplastic polymer fibres of titre of 0.5 to 10 dtex, two of said layers consist essentially of meltblown fibres of thermoplastic polymers which layers are located at both sides of the first central non-woven layer and which meltblown layers are covered by non-woven layers consisting essentially of thermoplastic polymer fibres of titre of 0.5 to 10 dtex.

8. A one-layered sheet impregnated with a liquid which is a spunlaced fabric produced from a fibre web consisting essentially of 20 to 97 % by weight of thermoplastic polymer fibres of titre 0.5 to 10 dtex and of 3 to 80 % by weight of split-fibres of thermoplastic polymers and of 0 to 50 % by weight of meltblown fibres of thermoplastic polymers.

9. A sheet as claimed in claims 1 or 7, wherein the first non-woven layer possesses a base weight of 5 - 50 g/m².

10. A sheet as daimed in claims 1 or 7, wherein a single non-woven split-fibre layer of thermoplastic polymers possesses a base weight of 5 - 100 g/m2.

11. A sheet as claimed in claims 1, 7 or 8, wherein the single fibres of the spfit-fibres of thermoplastic polymers possess a titre of less than 1 dtex.

12. A sheet as claimed in claims 5, 6 or 7, wherein a single layer consisting essentially of meltblown fibres of thermoplastic polymers possesses a base weight of 5 - 100 g/m².

13. A sheet as claimed in claims 1, 7 or 8, wherein the thermoplastic polymer fibres of titre of 0.5 to 10 dtex are continuous filaments or staple fibres of polyester, polyamide or polyolefin, preferably continuous filaments or staple fibres of polypropylene.

14. A sheet as daimed in claims 1 or 8, wherein the split-fibres of thermoplastic polymers consist essentially of combinations of at least two splittable thermoplastic polymers, preferably of combinations of polyester /polyamide, polyester / polyolefin or combinations of polyolefins, preferably of polyethylene / polypropylene, of polypropylene / modified polypropylene or of polypropylene / modified polyethylene.

15. A sheet as claimed in claims 1 or 8. wherein the split-fibres of thermoplastic polymers consist essentially of combinations of thermoplastic polymer fibres one of said thermoplastic polymers being hydrophilic and/or hydrophilic modified.

16. A sheet as claimed in claim 15, wherein the thermoplastic polymer fibres are continuous filaments.

17. A sheet as claimed in claim 15, wherein the thermoplastic polymer fibres are staple fibres.

18. A sheet as claimed in claims 5, 6 or 7, wherein the meltblown fibres consist of polyolefin, preferably of polypropylene,

19. A sheet as claimed in daims 1, 7 or 8, wherein the thermoplastic polymer fibres of titre of 0.5 to 10 dtex are continuous filaments or staple fibres of polyolefin, preferably of polypropylene, and the split-fibres of thermoplastic polymers are continuous filaments or staple fibres of the combination polyester polyamide or of the combination polyester / polypropylene or of a combination of polyolefins, preferably of a combination potyethytene /polypropylene, polypropylene / modified polypropylene or polypropylene /modified polyethylene.

20. A sheet as claimed in claims 1, 7 or 8, wherein the layer(s) of the sheet is/are mechanically entangled, preferably hydroentangled.

21. A sheet as claimed in claims 1, 7 or 8, wherein the layer(s) of the sheet are point bonded by the action of an embossing calendering roll.

22. A sheet as claimed in claims 1, 7 or 8, wherein at least one surface is embossed with a pattern.

23. A sheet as claimed in claims 1 or 7, wherein at least one outer layer is coloured.

24. A sheet as claimed in claims 1, 7 or 8, wherein thickness is between 0.05 and 2 mm.

25. A sheet as claimed in claim 1, 7 or 8, wherein the liquid is an aqueous lotion comprising surface active agents.

26. A process for the production of a sheet as claimed in claim 1 comprising the following steps:
a) combination of a first non-woven layer consisting essentially of thermoplastic polymer fibres of titre of 0.5 to 10 dtex with at least one second non-woven split-fibres layer comprising split fibres and/or splittable fibres of thermoplastic polymers,
b) mechanically entangling the layers by action of needles and/or water and/or calendering thereby optionally splitting said splittable fibres into split-fibres, and
c) impregnation of the sheet with a liquid.

27. A process for the production of a sheet as claimed in claim 7 comprising the following steps:
d) combination of a first non-woven layer consisting essentially of thermoplastic polymer fibres of titre of 0.5 to 10 dtex on both surfaces with layers consisting essentially of meltblown fibres of thermoplastic polymers,
e) covering said meltblown layers with non-woven layers consisting essentially of thermoplastic polymer fibres of titre of 0.5 to 10 dtex,
f) mechanically entangling the sheets by action of needles and/or water and/or calendering, and
g) impregnation of the sheet with a liquid.

28. A process for the production of an one-layered sheet as claimed in claim 8 comprising the following steps:
h) forming a fibre web consisting essentially of 20 to 97 % by weight of thermoplastic polymer fibres of titre 0.5 to 10 dtex and of 3 to 80 % by weight of split-fibres of thermoplastic polymers and of 0 to 50 % by weight of meltblown fibres of thermoplastic polymers,
i) mechanically entangling the sheets by the action of needles and/or water and/or by calendering, thereby optionally splitting said splittable fibres into split-fibres, and
j) impregnation of the sheet with a liquid.

29. Use of the sheet as claimed in claims 1, 7 or 8 as a personal cleansing wipe.

30. Use as claimed in claim 29, wherein the sheet is used as a baby wipe.

31. Use of the sheet as claimed in daims 1, 7 or 8 for polishing purposes.
